# EUROPEAN PATENT SPECIFICATION

(11) **EP 2 488 949 B1**
(45) Date of publication and mention of the grant of the patent: **07.05.2014**
(21) Application number: 10763567.4
(22) Date of filing: 01.10.2010
(51) Int. Cl.: G06F 11/14, G06F 12/08

(54) **DE-DUPLICATION STORAGE SYSTEM WITH MULTIPLE INDICES FOR EFFICIENT FILE STORAGE**
ENTDUPLIZIERUNGSSPEICHERSYSTEM MIT MEHREREN INDIZES FÜR EFFIZIENTE DATEISPEICHERUNG
SYSTÈME DE MÉMORISATION À DÉDUPLICATION À INDEX MULTIPLES POUR MÉMORISATION EFFICACE DE FICHIERS

(30) Priority: 16.10.2009 US 580697
(43) Date of publication of application: 22.08.2012
(73) Proprietor: Symantec Corporation, Mountain View, CA 94043 (US)
(72) Inventor: GUO, Fanglu, Los Angeles California 90066 (US); WU, Weibao, Vadnais Heights Minnesota 55127 (US)
(74) Representative: Lieb, Fabian
(86) International application number: PCT/US2010/051023
(87) International publication number: WO 2011/046754

(56) References cited:
- US-A- 6 032 224
- US-A1- 2008 133 835
- US-A1- 2009 013 129

## Description

### BACKGROUND OF THE INVENTION

### Field of the Invention

This invention relates generally to data backup software for computer systems. More particularly, the invention relates to backup software which operates to create and use multiple indices for a de-duplication storage system.

### Description of the Related Art

Large organizations often use backup storage systems which backup files used by a plurality of client computer systems. The backup storage system may utilize data de-duplication techniques to avoid the amount of data that has to be stored. For example, it is possible that a file changes little or not at all from one backup to the next. De-duplication techniques can be utilized so that portions of the file data which have already been backed up do not need to be backed up again. The file may be split into multiple segments, and the file segments may be individually stored in the backup storage system as segment objects. When a new version of the file is backed up, the backup software may check whether or not segment objects representing the current file segments are already stored in the backup storage system. Each segment object which is already stored may be referenced again without storing a new duplicate of the segment object.

The backup storage system may use an index which specifies the storage locations of the segment objects in the backup storage system. Fingerprints of the segment objects may be created by applying a hash function to the segment objects. The index may map the fingerprints of the segment objects to the storage locations of the segment objects. When a file is backed up to the system, it is divided into segments and the fingerprints of the segments are looked up in the index. If a segment is found in the index, the segment can be re-used and does not need to be stored again. Therefore, only one copy of each unique segment is stored, and multiple files can share the single copy of the segment.

To make the index lookup speed fast, the index can be stored in RAM. This solution is effective for small backup storage systems, but it does not scale well to large systems. When the system capacity reaches hundreds of terabytes, the number of segments can be over ten billion. Managing an index for ten billion fingerprints becomes problematic because the size of the index is too large to fit into memory.

If the index is stored on disk, entry lookup, creation, deletion and modification in the index is also problematic because it will be slow. Random disk access has very poor performance with no more than 1000 index entry accesses per second in some systems.

US 2008/0133835 A1 discloses a data storage system that includes a cache implemented in low-latency memory and a metadata index implemented in relatively high latency memory. When storing a data segment, the system first checks the cache to try to find the segment. If the segment is not found then the metadata index is checked.

### SUMMARY

According to the invention a computer accessible storage medium according to claim 1, a method according to claim 8, and a system according to claim 13 are provided.

In some embodiments the first type of storage device may be a storage device which enables fast access to all of the contents of the storage device. In some embodiments the first type of storage device may be random access memory (RAM). In other embodiments the first type of storage device may be a solid state drive (SSD). Each index of the first group specifies storage locations of file segments stored in the de-duplication storage system.

In some embodiments the second type of storage device may be a storage device on which large amounts of data can be stored inexpensively, such as one or more disk drives for example. Again, each index of the second group specifies storage locations of file segments stored in the de-duplication storage system.

In a further embodiment, the method may operate to move a particular index of the first group stored in the RAM to the second group stored on the one or more disk drives in response to determining that the particular index of the first group has reached a maximum size or become full. In some embodiments the method may also determine a plurality of most frequently used file segments of the particular index of the first group and add the most frequently used file segments to another index of the first group in response to determining that the particular index of the first group is to be moved to the second group.

The dependent claims set out particular embodiments of the invention.

### BRIEF DESCRIPTION OF THE DRAWINGS

A better understanding of the invention can be obtained when the following detailed description is considered in conjunction with the following drawings, in which:
FIG. 1 illustrates a plurality of client computer systems coupled to a de-duplication storage system;
FIG. 2 is a diagram illustrating an example of a backup server computer in the de-duplication storage system;
FIG. 3 illustrates various software modules stored in the system memory of the backup server computer;
FIG. 4 is a flowchart diagram illustrating one embodiment of a method for backing up a new file to the de-duplication storage system;
FIG. 5 is a flowchart diagram illustrating one embodiment of a method for restoring a file from the de-duplication storage system; and
FIGs. 6-8 illustrate indices used by the de-duplication storage system.

While the invention is susceptible to various modifications and alternative forms, specific embodiments thereof are shown by way of example in the drawings and are described in detail. It should be understood, however, that the drawings and detailed description thereto are not intended to limit the invention to the particular form disclosed, but on the contrary, the intention is to cover all modifications, falling within the scope of the present invention as defined by the appended claims.

### DETAILED DESCRIPTION

Various embodiments of a system and method for backing up and restoring files are disclosed. The method may operate to backup the files to a storage system in which de-duplication techniques are utilized in order to avoid storing duplicate copies of the file data. A storage system which uses de-duplication to avoid storing duplicate copies of a data object is referred to herein as a de-duplication storage system. The files may be split into segments, and the file data may be stored in the de-duplication storage system as individual segments. As described below, the system may use multiple indices which specify storage locations of segments stored in the de-duplication storage system, where one or more of the indices are stored in fast storage, such as RAM or a solid state drive, and one or more are stored on inexpensive storage, such as a disk drive.

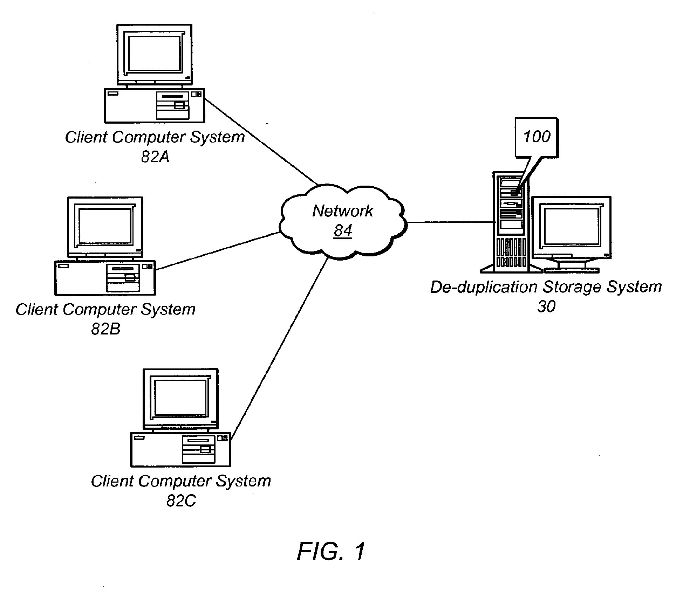

FIG. 1 illustrates a plurality of client computer systems 82 coupled to a de-duplication storage system 30 by a network 84. In various embodiments, the client computer systems 82 may be coupled to the de-duplication storage system 30 by any type of network or combination of networks. For example, the network 84 may include any type or combination of local area network (LAN), a wide area network (WAN), an Intranet, the Internet, etc. Examples of local area networks include Ethernet networks, Fiber Distributed Data Interface (FDDI) networks, and token ring networks. Also, each computer or device may be coupled to the network using any type of wired or wireless connection medium. For example, wired mediums may include Ethernet, fiber channel, a modem connected to plain old telephone service (POTS), etc. Wireless connection mediums may include a satellite link, a modem link through a cellular service, a wireless link such as Wi-Fi™, a wireless connection using a wireless communication protocol such as IEEE 802.11 (wireless Ethernet), Bluetooth, etc.

The de-duplication storage system 30 may execute backup software 100 which receives files from the client computer systems 82 via the network 84 and stores the files, e.g., for backup storage. For example, the backup software 100 may periodically communicate with the client computer systems 82 in order to backup files located on the client computer systems 82.

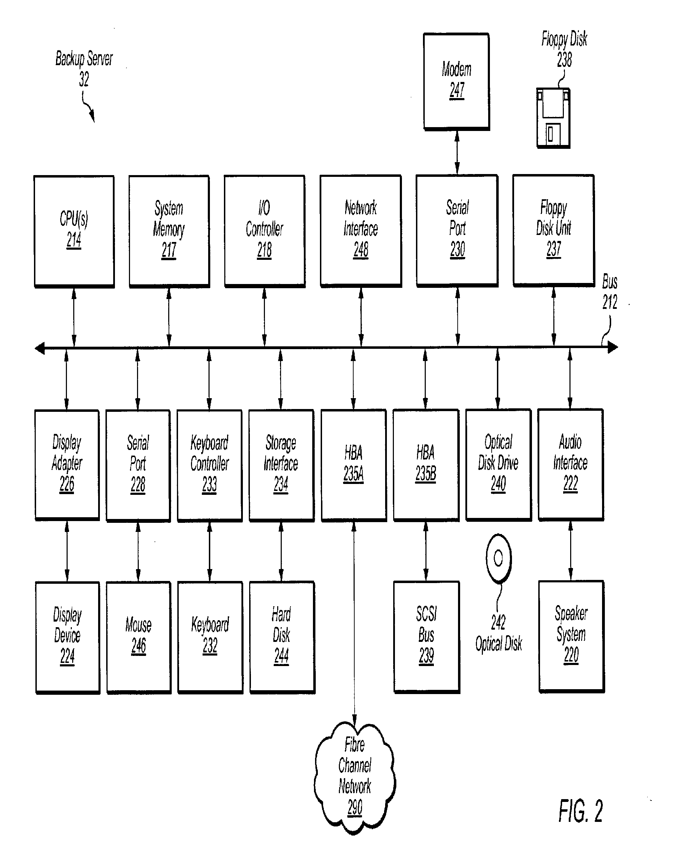

The de-duplication storage system 30 may include one or more backup server computers 32 which execute the backup software 100 and communicate with the client computer systems 82. FIG. 2 is a diagram illustrating an example of a backup server computer 32 in detail according to one embodiment. In general, the backup server computer 32 may be any type of physical computer or computing device, and FIG. 2 is given as an example only. In the illustrated embodiment, the backup server 32 includes a bus 212 which interconnects major subsystems or components of the backup server 32, such as one or more central processor units 214, system memory 217 (typically RAM, but which may also include ROM, flash RAM, or the like), an input/output controller 218, an external audio device, such as a speaker system 220 via an audio output interface 222, an external device, such as a display screen 224 via display adapter 226, serial ports 228 and 230, a keyboard 232 (interfaced with a keyboard controller 233), a storage interface 234, a floppy disk drive 237 operative to receive a floppy disk 238, a host bus adapter (HBA) interface card 235A operative to connect with a Fibre Channel network 290, a host bus adapter (HBA) interface card 235B operative to connect to a SCSI bus 239, and an optical disk drive 240 operative to receive an optical disk 242. Also included are a mouse 246 (or other point-and-click device, coupled to bus 212 via serial port 228), a modem 247 (coupled to bus 212 via serial port 230), and a network interface 248 (coupled directly to bus 212).

The bus 212 allows data communication between central processor(s) 214 and system memory 217, which may include read-only memory (ROM) or flash memory (neither shown), and random access memory (RAM), as previously noted. The RAM is generally the main memory into which software programs are loaded, including the backup software 100. The ROM or flash memory can contain, among other code, the Basic Input-Output system (BIOS) which controls basic hardware operation such as the interaction with peripheral components. Software resident with the backup server 32 is generally stored on and accessed via a computer-readable medium, such as a hard disk drive (e.g., fixed disk 244), an optical drive (e.g., optical drive 240), a floppy disk unit 237, or other storage medium. Additionally, software can be received through the network modem 247 or network interface 248.

The storage interface 234, as with the other storage interfaces of the node 10, can connect to a standard computer-readable medium for storage and/or retrieval of information, such as one or more disk drives 244. The backup software 100 may store the file data received from the client computer systems 82 on the disk drive(s) 244. In some embodiments the backup software 100 may also, or may alternatively, store the file data on a shared storage device 40. In some embodiments the shared storage device 40 may be coupled to the backup server 32 through the fibre channel network 290. In other embodiments the shared storage device 40 may be coupled to the backup server 32 through any of various other types of storage interfaces or networks. Also, in other embodiments the backup software 100 may store the file data on any of various other types of storage devices included in or coupled to the backup server computer 32, such as tape storage devices, for example.

Many other devices or subsystems (not shown) may be connected to the backup server 32 in a similar manner. Conversely, all of the devices shown in FIG. 2 need not be present to practice the present disclosure. The devices and subsystems can be interconnected in different ways from that shown in FIG. 2. Code to implement the backup software 100 described herein may be stored in computer-readable storage media such as one or more of system memory 217, disk drive 244, optical disk 242, or floppy disk 238. The operating system provided on the backup server 32 may be a Microsoft Windows® operating system, UNIX® operating system, Linus® operating system, or another operating system.

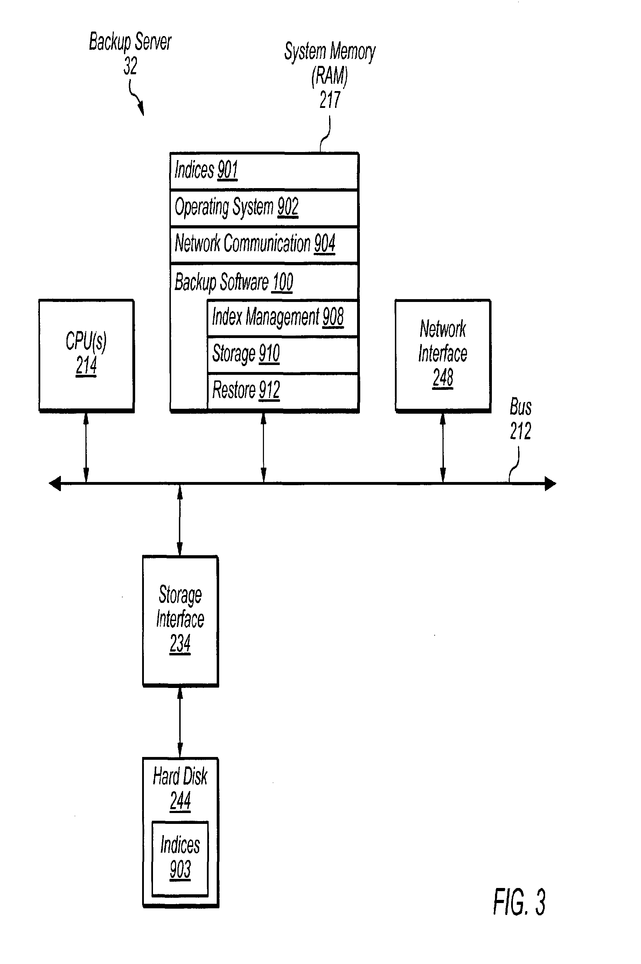

FIG. 3 illustrates various software modules stored in the system memory 217 of the backup server 32. The program instructions of the software modules are executable by the one or more processors of the backup server 32. The software modules illustrated in FIG. 3 are given as one example of a software architecture which implements various features described herein. In other embodiments, other software architectures may be used.

In the illustrated embodiment the software of the backup server 32 includes operating system software 902 which manages the basic operation of the backup server 32. The software of the backup server 32 also includes a network communication module 904. The network communication module 904 may be used by the operating system software 902, backup software 100, or other software modules in order to communicate with other computer systems, such as the client computer systems 82. The software of the backup server 32 also includes the backup software 100. The backup software 100 includes various modules such as a Index Management module 908, a Storage module 910, and a Restore module 912. The functions performed by the various modules of the backup software 100 are described below.

The index management module 908 of the backup software 100 may create and use multiple indices instead of one large index. Each index may specify storage locations of various file segments stored in the de-duplication system. A first group of one or more indices may be stored on a first type of storage device. The first type of storage device may be a storage device which enables fast access to all of the contents of the storage device. In some embodiments the first type of storage device may be random access memory (RAM), e.g., the system memory 217. In other embodiments the first type of storage device may be a sold state drive (SSD), flash memory device, or other type of storage device.

A second group of one or more indices may be stored on another type of storage device. The second type of storage device may be an economically inexpensive storage device in which very large amounts of data can be stored inexpensively. In some embodiments the second type of storage device may be one or more disk drives, e.g., the disk drive(s) 244.

When backing up a file, the backup software 100 may use the first group of indices stored in the fast storage (e.g., RAM), but not the second group of indices stored on the disk drive, to attempt to lookup storage locations of the file segments of the file. The first group of indices may be large enough to be able to lookup most file segments that will be needed, but are small enough to fit into the RAM. When restoring a file, the second group of indices stored on the disk drive may be used, as described below.

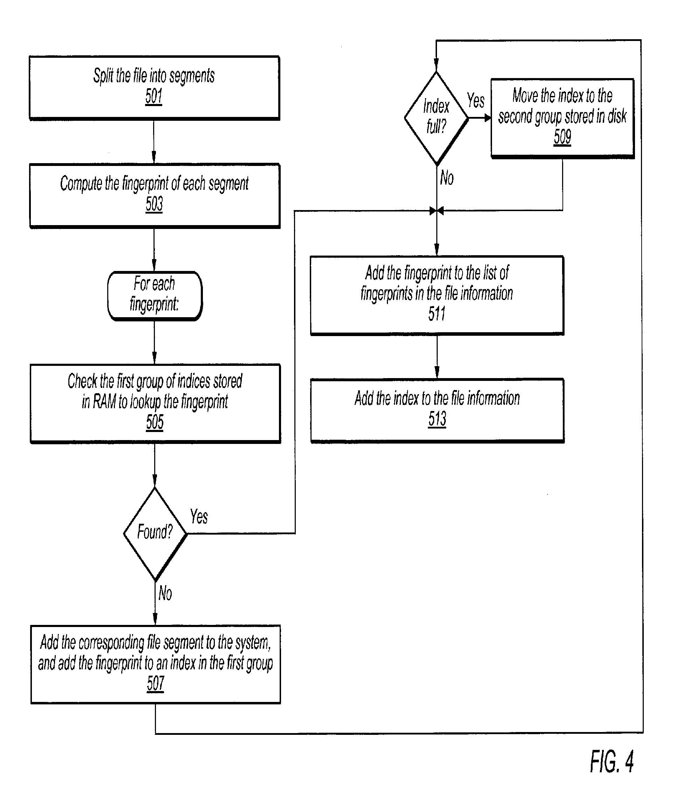

FIG. 4 is a flowchart diagram illustrating one embodiment of a method for backing up a new file to the de-duplication storage system 30. The method may be implemented by the backup software 100 executing on one or more backup server computers 32 of the de-duplication storage system 30.

As indicated in block 501, the file may be split into a plurality of segments. As indicated in block 503, the fingerprint or signature of each segment may be computed by applying a hash function or other algorithm to the data of the segment. For each fingerprint, the following steps may be performed.

As indicated in block 505, the backup software 100 may check the first group of indices stored in the fast storage (e.g., RAM) to attempt to lookup the fingerprint. The second group of indices stored in the inexpensive storage (e.g., disk drive) are not checked for the fingerprint. Since the first group of indices are stored in RAM or on another type of fast storage device, these indices can be accessed quickly.

If the fingerprint is not found, this indicates that the corresponding file segment may not be stored in the de-duplication storage system 30. Thus, the segment is added to the de-duplication storage system 30, and the fingerprint is added to an index in the first group, along with information specifying the storage location where the segment can be accessed, as indicated in block 507. If the index is full after adding the fingerprint, then the index may be moved to the second group of indices stored on the disk drive, as indicated in block 509. The index may be replaced in the first group with a new empty index.

The backup software 100 may also store file information which specifies a list of fingerprints of the segments of the file. As indicated in block 511, the current fingerprint may be added to the list of fingerprints in the file information. In addition, the index in which the fingerprint was found (or the index to which the fingerprint was added) may be added to the file information. This enables the backup software 100 to determine which index can be used to lookup the fingerprint in the event that it is necessary to restore the file.

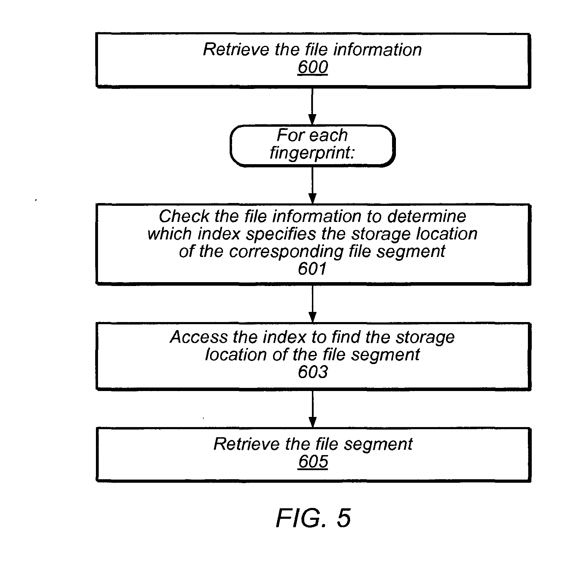

FIG. 5 is a flowchart diagram illustrating one embodiment of a method for restoring a file from the de-duplication storage system 30. The method may be implemented by the backup software 100 executing on one or more backup server computers 32 of the de-duplication storage system 30.

The backup software 100 may retrieve the file information from the file which was stored when the file was backed up. As described above, the file information includes a list of the fingerprints of the segments of the file. Blocks 601, 603 and 605 may be performed for each fingerprint in the list.

As indicated in block 601, the backup software 100 may check the file information to determine which index specifies the storage location of the corresponding file segment identified by the fingerprint. This index may then be accessed to find the storage location of the file segment, as indicated in block 603. The file segment may then be retrieved, as indicated in block 605.

Once all of the file segments have been retrieved, the segments can be concatenated to restore the file.

In some embodiments the first group of indices stored in RAM may include a special index referred to as the base index which stores the fingerprints which are most frequently encountered. This may enable frequently used fingerprints to remain in fast storage where they can be quickly found when backing up new files to the de-duplication storage system. In other embodiments the base index may include other special fingerprints. For example, in some embodiments the fingerprint of the first segment of each file may be added to the base index.

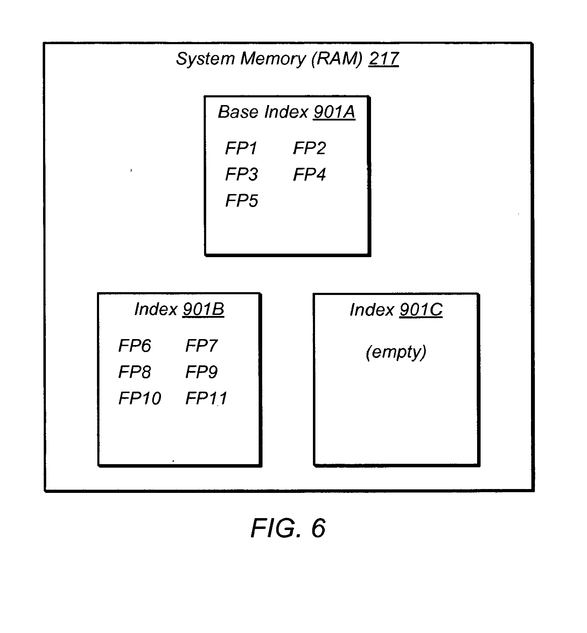

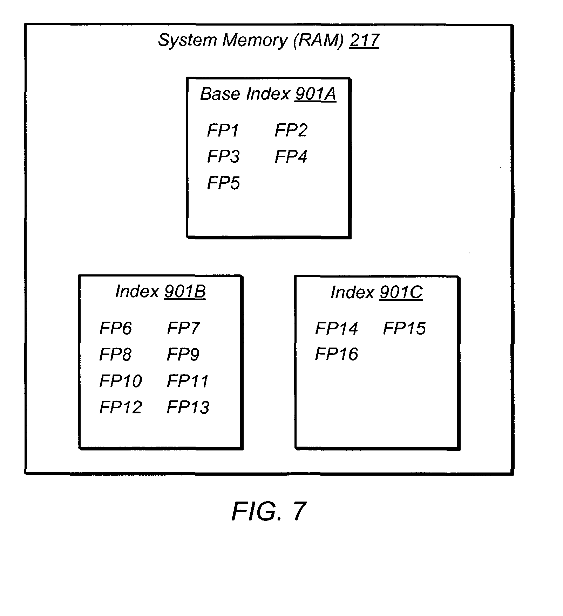

FIG. 6 illustrates an example in which three indices are stored in the system memory (RAM) 217. The index 901A, referred to as the base index, may remain in memory at all times, while the other two indices 901B and 901C may be moved to the disk drive when they become full. The base index 901A maps the fingerprints of the most frequently used file segments to the storage locations of the most frequently used file segments. As new files are added to the storage system, the fingerprints of new segments contained in the files are added to the index 901B. In this example, the index 901B currently includes the fingerprints FP6, FP7, FP8, FP9, FP10, and FP11. FIG. 7 illustrates the indices at a later time. The index 901B is now full, so new fingerprints are now being added to the index 901C.

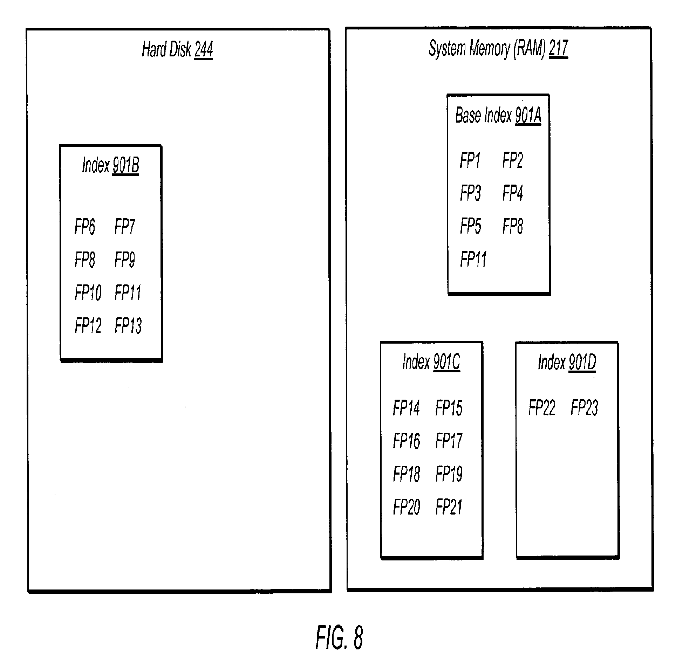

FIG. 8 illustrates the indices at a later time after the index 901C has become full. In order to make room for a new index where new fingerprints can be added, the index 901B has been moved out of the RAM 217 and onto the hard disk drive 244. In addition, the backup software 100 has determined the most frequently used fingerprints (FP8 and FP11) of the index 90 1 B and added them to the index 901A. A new index 901D has been created for adding new fingerprints of new file segments.

Suppose now that a new file is received for storage in the storage system, and the file includes the segment with the fingerprint FP9. The storage module 910 of the backup software 100 attempts to lookup the storage location of the segment in the indices stored in the RAM 217 using the fingerprint FP9. However, the segment is not found since none of the indices in the RAM 217 include the fingerprint FP9. Thus, a duplicate segment is added to the storage system in this case. However, the indices stored in the RAM 217 may be large enough so that they include a "working set" of most fingerprints that will be needed. Thus, the situation in which duplicate segments are added may be relatively rare. In some embodiments the indices 901B and 901 C may be large enough to contain the fingerprints for all the segments encountered in several days or weeks worth of backups.

Suppose now that a file which uses the segment having the fingerprint FP 10 needs to be restored. Again, the fingerprint FP10 is not included in any of the indices stored in the RAM 217. However, the file information indicates which index was used to index the segments of the file. Thus, the file information indicates that the index 901B should be used to lookup the storage locations of the file's segments so that the file can be restored. Thus, the restore module 912 of the backup software 100 may access the index 901B on the disk drive 244.

Thus, instead of using one large index that must be stored in RAM or on disk, multiple smaller indices are used. One or more indices sufficiently large to lookup most of the recently added segments and the most frequently used segments are stored in the RAM. When adding new files to the system, only the indices in RAM are used to lookup the storage locations of the file segments. This makes the lookup fast and scalable. The stale indices are stored on disk and can be used to lookup the storage locations of segments when restoring files.

The fingerprints of the most frequently used segments are kept in the base index and are always available. As long as the RAM is large enough to keep the working set of the segment fingerprints, segment lookup in de-duplication can achieve high speed without sacrificing scalability. The indices which are not in RAM are used for restore only. Each file records which index is used for its segments. During restore, each segment of each file can still be found by looking up the old indices from disk.

Because each index is smaller than conventional systems which use one large index, operations using the indices are more efficient, such as entry lookup, creation, deletion, and modification. Because the indices stored in RAM contain only the fingerprints of a subset of all the segments stored in the system, it is faster to search these indices to determine whether they contain a given fingerprint. The speed to determine that a particular fingerprint is not in the index is important because a significant portion of the file data may be new data.

In case that the working set of fingerprints in the indices stored in RAM is not big enough, the system may result in duplicated segments. This is a tradeoff between costs and efficiency.

During restore, some index entries may need to be searched from disk. To make it faster, the on-disk index may be loaded to RAM in some embodiments while it is being used.

Various embodiments of a method for backing up and restoring files have been described above. The method is implemented by various devices operating in conjunction with each other, and causes a transformation to occur in one or more of the devices. For example, a backup server computer of the de-duplication storage system (or a storage device used by the backup server computer) may be transformed by storing indices as discussed above.

It is noted that various functions described herein may be performed in accordance with cloud-based computing techniques or software as a service (Saas) techniques in some embodiments. For example, in some embodiments the functionality of the backup software 100 may be provided as a cloud computing service.

It is noted that various embodiments may further include receiving, sending or storing instructions and/or data implemented in accordance with the foregoing description upon a computer-accessible storage medium. Generally speaking, a computer-accessible storage medium may include any storage media accessible by one or more computers (or processors) during use to provide instructions and/or data to the computer(s). For example, a computer-accessible storage medium may include storage media such as magnetic or optical media, e.g., one or more disks (fixed or removable), tape, CD-ROM, DVD-ROM, CD-R, CD-RW, DVD-R, DVD-RW, etc. Storage media may further include volatile or non-volatile memory media such as RAM (e.g. synchronous dynamic RAM (SDRAM), Rambus DRAM (RDRAM), static RAM (SRAM), etc.), ROM, Flash memory, non-volatile memory (e.g. Flash memory) accessible via a peripheral interface such as the Universal Serial Bus (USB) interface, etc. In some embodiments the computer(s) may access the storage media via a communication means such as a network and/or a wireless link.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as may be suited to the particular use contemplated.

## Claims

1. A computer-accessible storage medium storing program instructions executable to:
store a first group (901A, 901C, 901D) of one or more indices on a first type of storage device (217), wherein each index of the first group specifies storage locations of file segments stored in a de-duplication storage system (30);
store a second group (901B) of one or more indices on a second type of storage device (244), wherein each index of the second group specifies storage locations of file segments stored in the de-duplication storage system;
in response to receiving a first file to be stored in the de-duplication storage system:
split the first file into a plurality of file segments (501), wherein the plurality of file segments includes a particular file segment already stored in the de-duplication storage system prior to receiving the first file, wherein the second group of indices includes an index that specifies a storage location of the particular file segment;
use the first group of indices, but not the second group of indices, to attempt to lookup storage locations of the plurality of file segments of the first file (505);
store a duplicate copy of the particular file segment in the de-duplication storage system in response to determining that no index of the first group of indices specifies the storage location of the particular file segment (507);
in response to receiving a request to restore a second file from the de-duplication storage system:
determine that a particular index of the second group of indices specifies storage locations of file segments of the second file (601); and
use the particular index of the second group of indices to lookup the storage locations of the file segments of the second file in order to restore the second file (603).

2. The computer-accessible storage medium of claim 1, wherein the program instructions are further executable to:
move a particular index of the first group stored on the first type of storage device to the second group stored on the second type of storage device in response to determining that the particular index of the first group has reached a maximum size (509).

3. The computer-accessible storage medium of claim 2,
wherein the first group of indices includes a first index (901A) that specifies storage locations of frequently used file segments;
wherein the program instructions are further executable to:
determine a plurality of most frequently used file segments (FP8, FP11) of the particular index of the first group; and
add the plurality of most frequently used file segments to the first index in response to determining that the particular index of the first group is to be moved to the second group.

4. The computer-accessible storage medium of claim 2, wherein the program instructions are further executable to:
replace the particular index of the first group with a new index (901D) stored on the first type of storage device.

5. The computer-accessible storage medium of claim 1,
wherein the indices of the first group specify storage locations of file segments by mapping fingerprints (FP1, FP2) of the file segments to the storage locations of the file segments;
wherein the program instructions are executable to use the first group of indices to attempt to lookup the storage locations of the plurality of file segments of the first file by:
determining fingerprints of the plurality of file segments of the first file (503); and
attempting to lookup the storage locations of the plurality of file segments of the first file in one or more indices of the first group using the fingerprints of the plurality of file segments of the first file (505).

6. The computer-accessible storage medium of claim 1, wherein the first type of storage device is one of:
random access memory (RAM) (217);
a solid state drive (SSD).

7. The computer-accessible storage medium of claim 1,
wherein the second type of storage device is one or more disk drives (244).

8. A method comprising:
storing a first group (901A, 901C, 901D) of one or more indices on a first type of storage device (217), wherein each index of the first group specifies storage locations of file segments stored in a de-duplication storage system (30);
storing a second group (901B) of one or more indices on a second type of storage device (244), wherein each index of the second group specifies storage locations of file segments stored in the de-duplication storage system;
in response to receiving a first file to be stored in the de-duplication storage system:
splitting the first file into a plurality of file segments (501), wherein the plurality of file segments includes a particular file segment already stored in the de-duplication storage system prior to receiving the first file, wherein the second group of indices includes an index that specifies a storage location of the particular file segment;
using the first group of indices, but not the second group of indices, to attempt to lookup storage locations of the plurality of file segments of the first file (505);
storing a duplicate copy of the particular file segment in the de-duplication storage system in response to determining that no index of the first group of indices specifies the storage location of the particular file segment (507);
in response to receiving a request to restore a second file from the de-duplication storage system:
determining that a particular index of the second group of indices specifies storage locations of file segments of the second file (601); and
using the particular index of the second group of indices to lookup the storage locations of the file segments of the second file in order to restore the second file (603).

9. The method of claim 8, further comprising:
moving a particular index of the first group stored on the first type of storage device to the second group stored on the second type of storage device in response to determining that the particular index of the first group has reached a maximum size (509).

10. The method of claim 9,
wherein the first group of indices includes a first index (901A) that specifies storage locations of frequently used file segments;
wherein the method further comprises:
determining a plurality of most frequently used file segments (FP8, FP11) of the particular index of the first group; and
adding the plurality of most frequently used file segments to the first index in response to determining that the particular index of the first group is to be moved to the second group.

11. The method of claim 9, further comprising:
replacing the particular index of the first group with a new index (901D) stored on the first type of storage device.

12. The method of claim 8,
wherein the indices of the first group specify storage locations of file segments by mapping fingerprints (FP1, FP2) of the file segments to the storage locations of the file segments;
wherein the method comprises attempting to lookup the storage locations of the plurality of file segments of the first file by:
determining fingerprints of the plurality of file segments of the first file (503); and
attempting to lookup the storage locations of the plurality of file segments of the first file in one or more indices of the first group using the fingerprints of the plurality of file segments of the first file (505).

13. A system comprising:
one or more processors (214); and
random access memory (217) storing program instructions (100);
wherein the program instructions are executable by the one or more processors to:
store a first group (901A, 901C, 901D) of one or more indices on a first type of storage device (217), wherein each index of the first group specifies storage locations of file segments stored in a de-duplication storage system (30);
store a second group (910B) of one or more indices on a second type of storage device (244), wherein each index of the second group specifies storage locations of file segments stored in the de-duplication storage system;
in response to receiving a first file to be stored in the de-duplication storage system:
split the first file into a plurality of file segments (501), wherein the plurality of file segments includes a particular file segment already stored in the de-duplication storage system prior to receiving the first file, wherein the second group of indices includes an index that specifies a storage location of the particular file segment;
use the first group of indices, but not the second group of indices, to attempt to lookup storage locations of the plurality of file segments of the first file (505);
store a duplicate copy of the particular file segment in the de-duplication storage system in response to determining that no index of the first group of indices specifies the storage location of the particular file segment (507);
in response to receiving a request to restore a second file from the de-duplication storage system:
determine that a particular index of the second group of indices specifies storage locations of file segments of the second file (601); and
use the particular index of the second group of indices to lookup the storage locations of the file segments of the second file in order to restore the second file (603).

14. The system of claim 13, wherein the program instructions are further executable by the one or more processors to:
move a particular index of the first group stored on the first type of storage device to the second group stored on the second type of storage device in response to determining that the particular index of the first group has reached a maximum size (509).

15. The system of claim 13,
wherein the first group of indices includes a first index (901A) that specifies storage locations of frequently used file segments;
wherein the program instructions are further executable by the one or more processors to:
determine a plurality of most frequently used file segments (FP8, FP11) of the particular index of the first group; and
add the plurality of most frequently used file segments to the first index in response to determining that the particular index of the first group is to be moved to the second group.

16. The system of claim 13,
wherein the indices of the first group specify storage locations of file segments by mapping fingerprints (FP1, FP2) of the file segments to the storage locations of the file segments;
wherein the program instructions are executable by the one or more processors to use the first group of indices to attempt to lookup the storage locations of the plurality of file segments of the first file by:
determining fingerprints of the plurality of file segments of the first file (503); and
attempting to lookup the storage locations of the plurality of file segments of the first file in one or more indices of the first group using the fingerprints of the plurality of file segments of the first file (505).

## Patentansprüche

1. Computerzugängliches Speichermedium, das Programmanweisungen speichert, die ausführbar sind zum:
Speichern einer ersten Gruppe (901 A, 901 C, 901 D) von einem oder mehreren Indexen auf einer ersten Art von Speichervorrichtung (217), wobei jeder Index der ersten Gruppe Speicherpositionen von Dateisegmenten vorgibt, die in einem Deduplizierungsspeichersystem (30) gespeichert sind;
Speichern einer zweiten Gruppe (901 B) von einem oder mehreren Indexen auf einer zweiten Art von Speichervorrichtung (244), wobei jeder Index der zweiten Gruppe Speicherpositionen von Dateisegmenten vorgibt, die in dem Deduplizierungsspeichersystem gespeichert sind;
als Reaktion auf das Empfangen einer ersten Datei, die in dem Deduplizierungsspeichersystem zu speichern ist:
Aufteilen der ersten Datei in eine Vielzahl von Dateisegmenten (501), wobei die Vielzahl von Dateisegmenten ein bestimmtes Dateisegment umfasst, das bereits in dem Deduplizierungsspeichersystem gespeichert ist, bevor die erste Datei empfangen wird, wobei die zweite Gruppe von Indexen einen Index umfasst, der eine Speicherposition des bestimmten Dateisegments vorgibt;
Verwenden der ersten Gruppe von Indexen, doch nicht der zweiten Gruppe von Indexen, um zu versuchen, die Speicherpositionen der Vielzahl von Dateisegmenten der ersten Datei (505) zu finden;
Speichern eines Duplikats des bestimmten Dateisegments in dem Deduplizierungsspeichersystem als Reaktion auf das Bestimmen, dass kein Index der ersten Gruppe von Indexen die Speicherposition des bestimmten Dateisegments (507) vorgibt;
als Reaktion auf das Empfangen einer Anfrage zum Wiederherstellen einer zweiten Datei aus dem Deduplizierungsspeichersystem:
Bestimmen, dass ein bestimmter Index der zweiten Gruppe von Indexen Speicherpositionen der Dateisegmente der zweiten Datei (601) vorgibt; und
Verwenden des bestimmten Index der zweiten Gruppe von Indexen, um die Speicherpositionen der Dateisegmente der zweiten Datei zu finden, um die zweite Datei (603) wiederherzustellen.

2. Computerzugängliches Speichermedium nach Anspruch 1, wobei die Programmanweisungen ferner ausführbar sind zum:
Verschieben eines bestimmten Index der ersten Gruppe, die auf der ersten Art von Speichervorrichtung gespeichert ist, in die zweite Gruppe, die auf der zweiten Art von Speichervorrichtung gespeichert ist, als Reaktion auf das Bestimmen, dass der bestimmte Index der ersten Gruppe eine maximale Größe (509) erreicht hat.

3. Computerzugängliches Speichermedium nach Anspruch 2,
wobei die erste Gruppe von Indexen einen ersten Index (901 A) umfasst, der Speicherpositionen von häufig verwendeten Dateisegmenten vorgibt;
wobei die Programmanweisungen ferner ausführbar sind zum:
Bestimmen einer Vielzahl von am häufigsten verwendeten Dateisegmenten (FP8, FP11) des bestimmten Index der ersten Gruppe; und
Hinzufügen der Vielzahl von am häufigsten verwendeten Dateisegmenten zu dem ersten Index als Reaktion auf das Bestimmen, dass der bestimmte Index der ersten Gruppe in die zweite Gruppe umgelegt werden soll.

4. Computerzugängliches Speichermedium nach Anspruch 2, wobei die Programmanweisungen ferner ausführbar sind zum:
Ersetzen des bestimmten Index der ersten Gruppe durch einen neuen Index (901 D), der auf der ersten Art von Speichervorrichtung gespeichert ist.

5. Computerzugängliches Speichermedium nach Anspruch 1,
wobei die Indexe der ersten Gruppe Speicherpositionen von Dateisegmenten vorgeben, indem sie die Fingerabdrücke (FP1, FP2) der Dateisegmente den Speicherpositionen der Dateisegmente zuordnen;
wobei die Programmanweisungen ausführbar sind, um die erste Gruppe von Indexen zu verwenden, um zu versuchen, die Speicherpositionen der Vielzahl von Dateisegmenten der ersten Datei zu finden durch:
Bestimmen der Fingerabdrücke der Vielzahl von Dateisegmenten der ersten Datei (503); und
Versuchen, die Speicherpositionen der Vielzahl von Dateisegmenten der ersten Datei in einem oder mehreren Indexen der ersten Gruppe unter Verwendung der Fingerabdrücke der Vielzahl von Dateisegmenten der ersten Datei (505) zu finden.

6. Computerzugängliches Speichermedium nach Anspruch 1, wobei die erste Art von Speichervorrichtung eines ist von:
einem Arbeitsspeicher (RAM) (217);
einem Festkörperlaufwerk (SSD).

7. Computerzugängliches Speichermedium nach Anspruch 1, wobei die zweite Art von Speichervorrichtung einem oder mehreren Plattenlaufwerken (244) entspricht.

8. Verfahren, umfassend folgende Schritte:
Speichern einer ersten Gruppe (901 A, 901 C, 901 D) von einem oder mehreren Indexen auf einer ersten Art von Speichervorrichtung (217), wobei jeder Index der ersten Gruppe Speicherpositionen von Dateisegmenten vorgibt, die in einem Deduplizierungsspeichersystem (30) gespeichert sind;
Speichern einer zweiten Gruppe (901 B) von einem oder mehreren Indexen auf einer zweiten Art von Speichervorrichtung (244), wobei jeder Index der zweiten Gruppe Speicherpositionen von Dateisegmenten vorgibt, die in dem Deduplizierungsspeichersystem gespeichert sind;
als Reaktion auf das Empfangen einer ersten Datei, die in dem Deduplizierungsspeichersystem zu speichern ist:
Aufteilen der ersten Datei in eine Vielzahl von Dateisegmenten (501), wobei die Vielzahl von Dateisegmenten ein bestimmtes Dateisegment umfasst, das bereits in dem Deduplizierungsspeichersystem gespeichert ist, bevor die erste Datei empfangen wird, wobei die zweite Gruppe von Indexen einen Index umfasst, der eine Speicherposition des bestimmten Dateisegments vorgibt;
Verwenden der ersten Gruppe von Indexen, doch nicht der zweiten Gruppe von Indexen, um zu versuchen, die Speicherpositionen der Vielzahl von Dateisegmenten der ersten Datei (505) zu finden;
Speichern eines Duplikats des bestimmten Dateisegments in dem Deduplizierungsspeichersystem als Reaktion auf das Bestimmen, dass kein Index der ersten Gruppe von Indexen die Speicherposition des bestimmten Dateisegments (507) vorgibt;
als Reaktion auf das Empfangen einer Anfrage zum Wiederherstellen einer zweiten Datei aus dem Deduplizierungsspeichersystem:
Bestimmen, dass ein bestimmter Index der zweiten Gruppe von Indexen Speicherpositionen von Dateisegmenten der zweiten Datei (601) vorgibt; und
Verwenden des bestimmten Index der zweiten Gruppe von Indexen, um die Speicherpositionen der Dateisegmente der zweiten Datei zu finden, um die zweite Datei (603) wiederherzustellen.

9. Verfahren nach Anspruch 8, ferner umfassend:
Verschieben eines bestimmten Index der ersten Gruppe, die auf der ersten Art von Speichervorrichtung gespeichert ist, in die zweite Gruppe, die auf der zweiten Art von Speichervorrichtung gespeichert ist, als Reaktion auf das Bestimmen, dass der bestimmte Index der ersten Gruppe eine maximale Größe (509) erreicht hat.

10. Verfahren nach Anspruch 9,
wobei die erste Gruppe von Indexen einen ersten Index (901 A) umfasst, der Speicherpositionen von häufig verwendeten Dateisegmenten vorgibt;
wobei das Verfahren ferner folgende Schritte umfasst:
Bestimmen einer Vielzahl von am häufigsten verwendeten Dateisegmenten (FP8, FP11) des bestimmten Index der ersten Gruppe; und
Hinzufügen der Vielzahl von am häufigsten verwendeten Dateisegmente zu dem ersten Index als Reaktion auf das Bestimmen, dass der bestimmte Index der ersten Gruppe in die zweite Gruppe umgelegt werden soll.

11. Verfahren nach Anspruch 9, ferner umfassend:
Ersetzen des bestimmten Index der ersten Gruppe durch einen neuen Index (901 D), der auf der ersten Art von Speichervorrichtung gespeichert ist.

12. Verfahren nach Anspruch 8,
wobei die Indexe der ersten Gruppe Speicherpositionen von Dateisegmenten vorgeben, indem sie die Fingerabdrücke (FP1, FP2) der Dateisegmente den Speicherpositionen der Dateisegmente zuordnen;
wobei das Verfahren das Versuchen umfasst, die Speicherpositionen der Vielzahl von Dateisegmenten der ersten Datei zu finden durch:
Bestimmen der Fingerabdrücke der Vielzahl von Dateisegmenten der ersten Datei (503); und
Versuchen, die Speicherpositionen der Vielzahl von Dateisegmenten der ersten Datei in einem oder mehreren Indexen der ersten Gruppe unter Verwendung der Fingerabdrücke der Vielzahl von Dateisegmenten der ersten Datei (505) zu finden.

13. System, umfassend:
einen oder mehrere Prozessoren (214); und
einen Arbeitsspeicher (217), der Programmanweisungen (100) speichert;
wobei die Programmanweisungen durch den einen oder die mehreren Prozessoren ausführbar sind zum:
Speichern einer ersten Gruppe (901A, 901 C, 901 D) von einem oder mehreren Indexen auf einer ersten Art von Speichervorrichtung (217), wobei jeder Index der ersten Gruppe Speicherpositionen von Dateisegmenten vorgibt, die in einem Deduplizierungsspeichersystem (30) gespeichert sind;
Speichern einer zweiten Gruppe (901 B) von einem oder mehreren Indexen auf einer zweiten Art von Speichervorrichtung (244), wobei jeder Index der zweiten Gruppe Speicherpositionen von Dateisegmenten vorgibt, die in dem Deduplizierungsspeichersystem gespeichert sind;
als Reaktion auf das Empfangen einer ersten Datei, die in dem Deduplizierungsspeichersystem zu speichern ist:
Aufteilen der ersten Datei in eine Vielzahl von Dateisegmenten (501), wobei die Vielzahl von Dateisegmenten ein bestimmtes Dateisegment umfasst, das bereits in dem Deduplizierungsspeichersystem gespeichert ist, bevor die erste Datei empfangen wird, wobei die zweite Gruppe von Indexen einen Index umfasst, der eine Speicherposition des bestimmten Dateisegments vorgibt;
Verwenden der ersten Gruppe von Indexen, doch nicht der zweiten Gruppe von Indexen, um zu versuchen, die Speicherpositionen der Vielzahl von Dateisegmenten der ersten Datei (505) zu finden;
Speichern eines Duplikats des bestimmten Dateisegments in dem Deduplizierungsspeichersystem als Reaktion auf das Bestimmen, dass kein Index der ersten Gruppe von Indexen die Speicherposition des bestimmten Dateisegments (507) vorgibt;
als Reaktion auf das Empfangen einer Anfrage zum Wiederherstellen einer zweiten Datei aus dem Deduplizierungsspeichersystem:
Bestimmen, dass ein bestimmter Index der zweiten Gruppe von Indexen Speicherpositionen der Dateisegmente der zweiten Datei (601) vorgibt; und
Verwenden des bestimmten Index der zweiten Gruppe von Indexen, um die Speicherpositionen der Dateisegmente der zweiten Datei zu finden, um die zweite Datei (603) wiederherzustellen.

14. System nach Anspruch 13, wobei die Programmanweisungen ferner durch den einen oder die mehreren Prozessoren ausführbar sind zum:
Verschieben eines bestimmten Index der ersten Gruppe, die auf der ersten Art von Speichervorrichtung gespeichert ist, in die zweite Gruppe, die auf der zweiten Art von Speichervorrichtung gespeichert ist, als Reaktion auf das Bestimmen, dass der bestimmte Index der ersten Gruppe eine maximale Größe (509) erreicht hat.

15. System nach Anspruch 13,
wobei die erste Gruppe von Indexen einen ersten Index (901 A) umfasst, der Speicherpositionen von häufig verwendeten Dateisegmenten vorgibt;
wobei die Programmanweisungen ferner durch den einen oder die mehreren Prozessoren ausführbar sind zum:
Bestimmen einer Vielzahl von am häufigsten verwendeten Dateisegmenten (FP8, FP11) des bestimmten Index der ersten Gruppe; und
Hinzufügen der Vielzahl von am häufigsten verwendeten Dateisegmenten zu dem ersten Index als Reaktion auf das Bestimmen, dass der bestimmte Index der ersten Gruppe in die zweite Gruppe umgelegt werden soll.

16. System nach Anspruch 13,
wobei die Indexe der ersten Gruppe Speicherpositionen von Dateisegmenten vorgeben, indem sie die Fingerabdrücke (FP1, FP2) der Dateisegmente den Speicherpositionen der Dateisegmente zuordnen;
wobei die Programmanweisungen durch den einen oder die mehreren Prozessoren ausführbar sind, um die erste Gruppe von Indexen zu verwenden, um zu versuchen, die Speicherpositionen der Vielzahl von Dateisegmenten der ersten Datei zu finden durch:
Bestimmen der Fingerabdrücke der Vielzahl von Dateisegmenten der ersten Datei (503); und
Versuchen, die Speicherpositionen der Vielzahl von Dateisegmenten der ersten Datei in einem oder mehreren Indexen der ersten Gruppe unter Verwendung der Fingerabdrücke der Vielzahl von Dateisegmenten der ersten Datei (505) zu finden.

## Revendications

1. Support de stockage accessible par ordinateur stockant des instructions de programme exécutables de manière à :
stocker un premier groupe (901 A, 901 C, 901D) d'un ou plusieurs indices sur un premier type de dispositif de stockage (217), dans lequel chaque indice du premier groupe spécifie des emplacements de stockage de segments de fichier stockés dans un système de stockage avec déduplication (30) ;
stocker un second groupe (901 B) d'un ou plusieurs indices sur un second type de dispositif de stockage (244), dans lequel chaque indice du second groupe spécifie des emplacements de stockage de segments de fichier stockés dans le système de stockage avec déduplication ;
en réponse à la réception d'un premier fichier destiné à être stocké dans le système de stockage avec déduplication :
diviser le premier fichier en une pluralité de segments de fichier (501), dans lequel la pluralité de segments de fichier inclut un segment de fichier spécifique déjà stocké dans le système de stockage avec déduplication avant la réception du premier fichier, dans lequel le second groupe d'indices inclut un indice qui spécifie un emplacement de stockage du segment de fichier spécifique ;
utiliser le premier groupe d'indices, mais pas le second groupe d'indices, en vue de tenter de rechercher des emplacements de stockage de la pluralité de segments de fichier du premier fichier (505) ;
stocker une copie dupliquée du segment de fichier spécifique dans le système de stockage avec déduplication en réponse à la détermination selon laquelle aucun indice du premier groupe d'indices ne spécifie l'emplacement de stockage du segment de fichier spécifique (507) ;
en réponse à la réception d'une demande de restauration d'un second fichier à partir du système de stockage avec déduplication :
déterminer qu'un indice spécifique du second groupe d'indices spécifie des emplacements de stockage de segments de fichier du second fichier (601) ; et
utiliser l'indice spécifique du second groupe d'indices en vue de rechercher les emplacements de stockage des segments de fichier du second fichier afin de restaurer le second fichier (603).

2. Support de stockage accessible par ordinateur selon la revendication 1, dans lequel les instructions de programme sont en outre exécutables de manière à :
déplacer un indice spécifique du premier groupe stocké sur le premier type de dispositif de stockage vers le second groupe stocké sur le second type de dispositif de stockage, en réponse à la détermination selon laquelle l'indice spécifique du premier groupe a atteint une taille maximale (509).

3. Support de stockage accessible par ordinateur selon la revendication 2,
dans lequel le premier groupe d'indices inclut un premier indice (901 A) qui spécifie des emplacements de stockage de segments de fichier fréquemment utilisés ;
dans lequel les instructions de programme sont en outre exécutables de manière à :
déterminer une pluralité de segments de fichier les plus fréquemment utilisés (FP8, FP11) de l'indice spécifique du premier groupe ; et
ajouter la pluralité de segments de fichier les plus fréquemment utilisés au premier indice en réponse à la détermination selon laquelle l'indice spécifique du premier groupe doit être déplacé vers le second groupe.

4. Support de stockage accessible par ordinateur selon la revendication 2, dans lequel les instructions de programme sont en outre exécutables de manière à :
remplacer l'indice spécifique du premier groupe par un nouvel indice (901 D) stocké sur le premier type de dispositif de stockage.

5. Support de stockage accessible par ordinateur selon la revendication 1, dans lequel les indices du premier groupe spécifient des emplacements de stockage de segments de fichier en mettant en correspondance des empreintes digitales (FP1, FP2) des segments de fichier avec les emplacements de stockage des segments de fichier ;
dans lequel les instructions de programme sont exécutables de manière à utiliser le premier groupe d'indices en vue de tenter de rechercher les emplacements de stockage de la pluralité de segments de fichier du premier fichier en :
déterminant des empreintes digitales de la pluralité de segments de fichier du premier fichier (503) ; et
tentant de rechercher les emplacements de stockage de la pluralité de segments de fichier du premier fichier dans un ou plusieurs indices du premier groupe en utilisant les empreintes digitales de la pluralité de segments de fichier du premier fichier (505).

6. Support de stockage accessible par ordinateur selon la revendication 1, dans lequel le premier type de dispositif de stockage correspond à l'un parmi :
une mémoire vive (RAM) (217) ;
un disque dur électronique (SSD).

7. Support de stockage accessible par ordinateur selon la revendication 1, dans lequel le second type de dispositif de stockage correspond à un ou plusieurs lecteurs de disque (244).

8. Procédé consistant à :
stocker un premier groupe (901 A, 901 C, 901D) d'un ou plusieurs indices sur un premier type de dispositif de stockage (217), dans lequel chaque indice du premier groupe spécifie des emplacements de stockage de segments de fichier stockés dans un système de stockage avec déduplication (30) ;
stocker un second groupe (901 B) d'un ou plusieurs indices sur un second type de dispositif de stockage (244), dans lequel chaque indice du second groupe spécifie des emplacements de stockage de segments de fichier stockés dans le système de stockage avec déduplication ;
en réponse à la réception d'un premier fichier destiné à être stocké dans le système de stockage avec déduplication :
diviser le premier fichier en une pluralité de segments de fichier (501), dans lequel la pluralité de segments de fichier inclut un segment de fichier spécifique déjà stocké dans le système de stockage avec déduplication avant la réception du premier fichier, dans lequel le second groupe d'indices inclut un indice qui spécifie un emplacement de stockage du segment de fichier spécifique ;
utiliser le premier groupe d'indices, mais pas le second groupe d'indices, en vue de tenter de rechercher des emplacements de stockage de la pluralité de segments de fichier du premier fichier (505) ;
stocker une copie dupliquée du segment de fichier spécifique dans le système de stockage avec déduplication en réponse à la détermination selon laquelle aucun indice du premier groupe d'indices ne spécifie l'emplacement de stockage du segment de fichier spécifique (507) ;
en réponse à la réception d'une demande de restauration d'un second fichier à partir du système de stockage avec déduplication :
déterminer qu'un indice spécifique du second groupe d'indices spécifie des emplacements de stockage de segments de fichier du second fichier (601) ; et
utiliser l'indice spécifique du second groupe d'indices en vue de rechercher les emplacements de stockage des segments de fichier du second fichier afin de restaurer le second fichier (603).

9. Procédé selon la revendication 8, consistant en outre à :
déplacer un indice spécifique du premier groupe stocké sur le premier type de dispositif de stockage vers le second groupe stocké sur le second type de dispositif de stockage, en réponse à la détermination selon laquelle l'indice spécifique du premier groupe a atteint une taille maximale (509).

10. Procédé selon la revendication 9,
dans lequel le premier groupe d'indices comprend un premier indice (901 A) qui spécifie des emplacements de stockage de segments de fichier fréquemment utilisés ;
dans lequel le procédé consiste en outre à :
déterminer une pluralité de segments de fichier les plus fréquemment utilisés (FP8, FP11) de l'indice spécifique du premier groupe ; et
ajouter la pluralité de segments de fichier les plus fréquemment utilisés au premier indice en réponse à la détermination selon laquelle l'indice spécifique du premier groupe doit être déplacé vers le second groupe.

11. Procédé selon la revendication 9, consistant en outre à :
remplacer l'indice spécifique du premier groupe par un nouvel indice (901 D) stocké sur le premier type de dispositif de stockage.

12. Procédé selon la revendication 8,
dans lequel les indices du premier groupe spécifient des emplacements de stockage de segments de fichier en mettant en correspondance des empreintes digitales (FP1, FP2) des segments de fichier avec les emplacements de stockage des segments de fichier ;
dans lequel le procédé consiste à tenter de rechercher les emplacements de stockage de la pluralité de segments de fichier du premier fichier en :
déterminant des empreintes digitales de la pluralité de segments de fichier du premier fichier (503) ; et
tentant de rechercher les emplacements de stockage de la pluralité de segments de fichier du premier fichier dans un ou plusieurs indices du premier groupe en utilisant les empreintes digitales de la pluralité de segments de fichier du premier fichier (505).

13. Système comprenant :
un ou plusieurs processeurs (214) ; et
une mémoire vive (217) stockant des instructions de programme (100) ;
dans lequel les instructions de programme sont exécutables par un ou plusieurs processeurs de manière à :
stocker un premier groupe (901 A, 901 C, 901D) d'un ou plusieurs indices sur un premier type de dispositif de stockage (217), dans lequel chaque indice du premier groupe spécifie des emplacements de stockage de segments de fichier stockés dans un système de stockage avec déduplication (30) ;
stocker un second groupe (901 B) d'un ou plusieurs indices sur un second type de dispositif de stockage (244), dans lequel chaque indice du second groupe spécifie des emplacements de stockage de segments de fichier stockés dans le système de stockage avec déduplication ;
en réponse à la réception d'un premier fichier destiné à être stocké dans le système de stockage avec déduplication :
diviser le premier fichier en une pluralité de segments de fichier (501), dans lequel la pluralité de segments de fichier inclut un segment de fichier spécifique déjà stocké dans le système de stockage avec déduplication avant la réception du premier fichier, dans lequel le second groupe d'indices inclut un indice qui spécifie un emplacement de stockage du segment de fichier spécifique ;
utiliser le premier groupe d'indices, mais pas le second groupe d'indices, en vue de tenter de rechercher des emplacements de stockage de la pluralité de segments de fichier du premier fichier (505) ;
stocker une copie dupliquée du segment de fichier spécifique dans le système de stockage avec déduplication en réponse à la détermination selon laquelle aucun indice du premier groupe d'indices ne spécifie l'emplacement de stockage du segment de fichier spécifique (507) ;
en réponse à la réception d'une demande de restauration d'un second fichier à partir du système de stockage avec déduplication :
déterminer qu'un indice spécifique du second groupe d'indices spécifie des emplacements de stockage de segments de fichier du second fichier (601) ; et
utiliser l'indice spécifique du second groupe d'indices en vue de rechercher les emplacements de stockage des segments de fichier du second fichier afin de restaurer le second fichier (603).

14. Système selon la revendication 13, dans lequel les instructions de programme sont en outre exécutables par ledit un ou lesdits plusieurs processeurs de manière à :
déplacer un indice spécifique du premier groupe stocké sur le premier type de dispositif de stockage vers le second groupe stocké sur le second type de dispositif de stockage, en réponse à la détermination selon laquelle l'indice spécifique du premier groupe a atteint une taille maximale (509).

15. Système selon la revendication 13,
dans lequel le premier groupe d'indices inclut un premier indice (901 A) qui spécifie des emplacements de stockage de segments de fichier fréquemment utilisés ;
dans lequel les instructions de programme sont en outre exécutables par ledit un ou lesdits plusieurs processeurs de manière à :
déterminer une pluralité de segments de fichier les plus fréquemment utilisés (FP8, FP11) de l'indice spécifique du premier groupe ; et
ajouter la pluralité de segments de fichier les plus fréquemment utilisés au premier indice en réponse à la détermination selon laquelle l'indice spécifique du premier groupe doit être déplacé vers le second groupe.

16. Système selon la revendication 13,
dans lequel les indices du premier groupe spécifient des emplacements de stockage de segments de fichier en mettant en correspondance des empreintes digitales (FP1, FP2) des segments de fichier avec les emplacements de stockage des segments de fichier ;
dans lequel les instructions de programme sont exécutables par ledit un ou lesdits plusieurs processeurs de manière à utiliser le premier groupe d'indices en vue de tenter de rechercher les emplacements de stockage de la pluralité de segments de fichier du premier fichier en :
déterminant des empreintes digitales de la pluralité de segments de fichier du premier fichier (503) ; et
tentant de rechercher les emplacements de stockage de la pluralité de segments de fichier du premier fichier dans un ou plusieurs indices du premier groupe en utilisant les empreintes digitales de la pluralité de segments de fichier du premier fichier (505).
